(19) Europäisches Patentamt
European Patent Office
Office européen des brevets

(11) Numéro de publication: **0 121 633**
**A1**

# (12) DEMANDE DE BREVET EUROPEEN

(21) Numéro de dépôt: **83400716.3**

(51) Int. Cl.³: **C 04 B 21/10**

(22) Date de dépôt: **11.04.83**

(43) Date de publication de la demande: **17.10.84**
**Bulletin 84/42**

(84) Etats contractants désignés: **AT CH DE FR GB IT LI SE**

(71) Demandeur: **Dion Biro, Guy, 46 Avenue du Chateau, F-94300 Vincennes (FR)**
Demandeur: **De Bona Biro, Renan, 4 Place Victor Hugo, F-75116 Paris (FR)**

(72) Inventeur: **Dion Biro, Guy, 46 Avenue du Chateau, F-94300 Vincennes (FR)**
Inventeur: **De Bona Biro, Renan, 4 Place Victor Hugo, F-75116 Paris (FR)**

(74) Mandataire: **Gayraud, René, 6, rue du Val, F-78200 Mantes-la-Ville (FR)**

## (54) Procédé de réalisation de mortier cellulaire et émulseur polyvalent pour cette réalisation.

(57) Mortier cellulaire ayant un coefficient de résistance mécanique, d'isolation phonique et thermique élevé, consistant à préparer un mélange de ciment et d'eau, afin d'obtenir une bouillie épaisse à laquelle on ajoute de la mousse obtenue par le mélange d'air et d'une solution aqueuse constituée d'eau et d'un émulseur polyvalent selon l'invention.

EP 0 121 633 A1

Procédé de réalisation de mortier cellulaire et émulseur polyvalent pour cette réalisation

La présente invention a pour objet un procédé de réalisation, artisanal ou industriel de mortier cellulaire ayant des propriétés d'isolation phonique et thermique supérieures aux divers mortiers actuellement utilisés, ainsi que l'émulseur polyvalent permettant cette réalisation.

Jusqu'à ce jour on a réalisé des éléments en béton pour la construction de bâtiment - banchage - parpaings - briques - ayant un très mauvais coefficient d'isolation sur le plan phonique ou thermique. Afin d'améliorer ces coefficients on a réalisé du béton cellulaire, en mélangeant dans une bétonnière de l'eau, du ciment, des gravillons et/ou du sable, avec addition d'un émulseur pour obtenir une solution aqueuse donnant de la mousse. Afin d'obtenir une émulsion avec ces divers composants on accélère la vitesse de rotation de la bétonnière. Cependant ce procédé a pour inconvénient majeur, du fait de la rotation rapide de la bétonnière, de séparer les produits de densité différente sous l'effet de la force centrifuge d'où il résulte un manque d'homogénéité du produit obtenu entraînant, lorsqu'on réalise un élément avec ledit produit, des variations de résistance mécanique et un coefficient d'isolation thermique et acoustique variant d'un point à un autre du même élément. De plus, les éléments obtenus avec ce béton cellulaire ont une résistance relativement grande à la compression, mais faible à la flexion du fait que l'union entre les éléments entrant dans sa composition est comparable à un collage. De plus ce procédé est d'un coût élevé du fait qu'aux prix des matières premières s'ajoutent les frais de transport et éventuellement de stockage.

La présente invention a pour objet de remédier à ces inconvénients en permettant de réaliser directement sur le chantier un béton cellulaire léger, ayant un coefficient phonique et thermique nettement amélioré et une homogénéité parfaite, le mélange se faisant en rotation lente dans une bétonnière, et en employant un émulseur polyvalent pour la réalisation d'une solution aqueuse donnant une mousse de bonne qualité.

Le procédé d'obtention du mortier cellulaire selon l'invention consiste à préparer dans une bétonnière à moyeu extérieur un mélange ciment-eau dans des proportions suivantes, données à titre d'exemple:

- ciment à prise lente : 20 kg.
- eau : 7 litres (taux pouvant être augmenté ou diminué en fonction de la température et du degré hygrométrique de l'air sans toutefois dépasser 9 à 10 %)

afin d'obtenir une bouillie épaisse à laquelle on ajoute 57 litres de mousse obtenue selon le procédé décrit plus loin, avec l'émulseur selon l'invention, dans les proportions suivantes données également à titre d'exemple:

- eau : 2,2 litres
- émulseur : 30 grammes.

Ces valeurs sont, comme indiqué plus haut, à ajuster en fonction de la température et de l'hygrométrie de l'air, ou bien entendu de la valeur du produit final souhaité.

Le mortier cellulaire selon l'invention est léger et résistant et il permet au moulage d'obtenir des effets de "peau" donnant au produit final l'aspect de la pierre de taille aussi bien que des surfaces lisses.

On peut également améliorer les performances du mortier selon l'invention en ajoutant aux constituants mentionnés plus haut des billes de polyuréthane expansé ou analogues. Dans ce cas la différence de densité

entre les billes et la mousse est si faible que le mélange est parfaitement homogène sans modification des caractéristiques mécaniques, phoniques ou thermiques recherchées, ce qui est impossible à obtenir avec des ingrédients aussi différents que le ciment, le sable, les gravillons et les billes de polyuréthane.

Comme indiqué plus haut, on emploie une solution aqueuse obtenue au moyen d'un émulseur. Cette solution aqueuse peut être obtenue suivant deux procédés: soit en prémélangeant dans un réservoir suivant des valeurs relatives désirées de l'eau et un émulseur, soit en mélangeant l'émulseur dans une canalisation d'eau sur laquelle sont montés un compteur de débit suivi d'un hydro-injecteur du type "GIFFARD" permettant l'obtention des valeurs relatives désirées. La solution aqueuse obtenue sera mélangée à l'air dans un générateur à dépression ou dans une chambre sous pression.

L'invention concerne également l'émulseur permettant la réalisation de la solution aqueuse. Les émulseurs sont utilisés dans de nombreux domaines tels que la lutte contre l'incendie, le dépoussiérage, etc. pour l'obtention de mousse à partir de solutions aqueuses auxquelles est incorporé de l'air. Il est possible d'additionner à ces émulseurs des produits tels que du gypse, du pouzzolane, du ciment-mortier, béton, etc., afin de réduire leur densité et faire varier leur propriété. La qualité de la mousse obtenue varie en fonction du pourcentage d'émulseur dans la solution aqueuse. Des essais effectués sur l'expansion de différents matériaux ont permis la réalisation d'un émulseur polyvalent dont la composition est décrite ci-dessous:

10 % - $NH_2 - CO - NH_2$

45 % - $CH_3 - [CH_2]_{10} - CH_2 - O - \overset{-}{S}O_3 . \overset{+}{H}N [CH_2-CH_2-OH]_3$

10 % - $C_2H_5 - O - CH_2 - CH_2 - O - CH_2 - CH_2 - OH$

10 % - 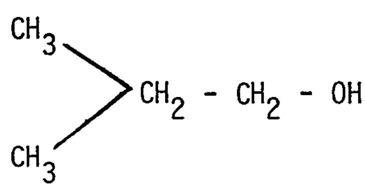

3 % - $R - CONH - CH_2 - CH_2 - OH$

22 % - $H_2O$

R étant un alkyle d'acide gras en C 12/14.

Pour obtenir une parfaite homogénéité de la préparation, elle devra être réalisée à une température de 54 à 57°C et maintenue pendant 47 à 49 heures, à cette température.

L'émulseur obtenu est utilisé comme décrit plus haut dans la réalisation de béton cellulaire, ou pour l'expansion de tout autre matériau. Cet émulseur peut bien entendu être utilisé également pour le dépoussiérage des gaz ou la dépollution atmosphérique par exemple.

Revendications de brevet.

1. Procédé de réalisation d'un mortier cellulaire, caractérisé en ce qu'on mélange dans une bétonnière à rotation lente vingt kilogrammes environ de ciment à prise lente, avec sept litres environ d'eau, afin d'obtenir une bouillie épaisse à laquelle on ajoute cinquante-sept litres environ de mousse obtenue par ailleurs au moyen d'une solution aqueuse contenant un émulseur polyvalent.

2. Procédé de réalisation d'un mortier cellulaire selon 1, caractérisé en ce que la mousse est obtenue à partir d'une solution aqueuse contenant trente grammes d'émulseur pour 2,2 litres d'eau environ, mélangée à de l'air dans un générateur à dépression ou à pression.

3. Procédé de réalisation de mortier cellulaire selon 1, caractérisé en ce que l'émulseur polyvalent a la composition suivante :

10 % - $NH_2 - CO - NH_2$

45 % - $CH_3 - [CH_2]_{10} - CH_2 - O - \overset{-}{SO_3} - \overset{+}{HN} - [CH_2\text{-}CH_2\text{-}OH]_3$

10 % - $C_2 - H_5 - O - CH_2 - CH_2 - O - CH_2 - CH_2 - OH -$

10 % - 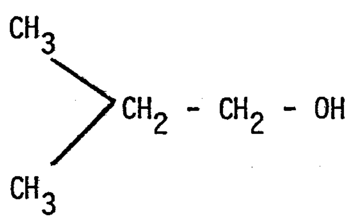

3 % - $R - CONH - CH_2 - CH_2 - OH$

22 % - $H_2O$

R étant un alkyl d'acide gras en C 12/14

l'ensemble étant réalisé à une température comprise entre 54° et 57°C maintenue pendant 47 à 49 heures pour stabilisation de l'émulseur.

Office européen des brevets

# RAPPORT DE RECHERCHE EUROPEENNE

0121633

Numéro de la demande

EP 83 40 0716

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| X,Y | FR-A-2 503 617 (DION-BIRO)<br>* En entier *<br>--- | 1-2 | B 44 C 1/16<br>B 41 M 5/02 |
| Y | BE-A- 858 184 (ZELLEN-LEICHT-BETON VERFAHRENSTECHNIK GmbH)<br>* Revendications 1-5 *<br>--- | 1-2 | |
| Y | FR-A-2 403 309 (BELLOTTI, ZANIBONI)<br>* Revendication unique *<br>--- | 1-2 | |
| Y | DE-A-2 933 787 (KOEHNE, RAINER, DR.)<br>* Revendication 1 *<br>----- | 1,3 | |
| | | | DOMAINES TECHNIQUES RECHERCHES (Int. Cl. 3) |
| | | | B 44 C<br>B 41 M |

Le présent rapport de recherche a été établi pour toutes les revendications

| Lieu de la recherche | Date d'achèvement de la recherche | Examinateur |
|---|---|---|
| LA HAYE | 18-11-1983 | STANGE R.L.H |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82